# EUROPEAN PATENT SPECIFICATION

(11) **EP 4 506 734 B1**
(45) Date of publication and mention of the grant of the patent: **18.11.2026**
(21) Application number: 23190133.1
(22) Date of filing: 07.08.2023
(51) Int. Cl.: G01T 5/02, G01T 5/10

(54) **COMPUTER-IMPLEMENTED METHOD FOR ANALYZING A SOLID-STATE NUCLEAR TRACK DETECTOR**
COMPUTER-GESTÜTZTES VERFAHREN ZUR ANALYSE EINES FESTKÖRPER-KERNSPURDETEKTORS
PROCÉDÉ MIS EN OEUVRE PAR ORDINATEUR D'ANALYSE D'UN DÉTECTEUR DE PISTE NUCLÉAIRE À L'ÉTAT SOLIDE

(43) Date of publication of application: 12.02.2025
(73) Proprietor: Marvel Fusion GmbH, 80339 Munich (DE)
(72) Inventor: Schollmeier, Marius, Munich (DE); Bekx, John Jasper, Munich (DE); Speicher, Martin, Munich (DE); Hartmann, Jens, Munich (DE)
(74) Representative: HKW Intellectual Property PartG mbB

(56) References cited:
- SINENIAN N ET AL: "The response of CR-39 nuclear track detector to 1-9 MeV protons", REVIEW OF SCIENTIFIC INSTRUMENTS, AMERICAN INSTITUTE OF PHYSICS, 2 HUNTINGTON QUADRANGLE, MELVILLE, NY 11747, vol. 82, no. 10, 1 October 2011 (2011-10-01), pages 103303 - 103303, XP012152063, ISSN: 0034-6748, [retrieved on 20111028], DOI: 10.1063/1.3653549
- SALAMON M H ET AL: "CHARGE RESOLUTION OF PLASTIC TRACK DETECTORS USED TO IDENTIFY RELATIVISTIC NUCLEI", NUCLEAR INSTRUMENTS & METHODS IN PHYSICS RESEARCH. SECTION B: BEAM INTERACTIONS WITH MATERIALS AND ATOMS, ELSEVIER BV, NL, vol. B6, no. 3, 1 February 1985 (1985-02-01), pages 504 - 512, XP001443223, ISSN: 0168-583X

## Description

### TECHNICAL FIELD

The present disclosure relates to a method for analyzing a solid-state nuclear track detector to obtain particle information for at least one particle species. It also relates to a computer program and a data processing apparatus for analyzing a solid-state nuclear track detector to obtain particle information for at least one particle species.

### TECHNICAL BACKGROUND

Solid-state nuclear-track detectors, SSNTD, are devices commonly used to detect nuclear particles, such as neutrons or charged particles, such as protons. They are also known as etched track detector or dielectric track detector, DTD.

SSNTDs, or SSNTD plates, are generally made of a sample of solid material, as a photographic emulsion, plastic, or resins. A material generally used is the polyallyl diglycol carbonate, PADC, C₁₂H₁₈O₇ or Columbia resin 39. This resin is also known as CR-39 or CR39 and has been used since the '60s in a large number of technical fields. Among others, it has been used in space physics, nuclear physics, medical research and biology, dosimetry, and laser matter interaction. Other materials used in the art includes, for instance, the LR-115 and the PM-355.

The working principle of an SSNTD can be summed up as follows. A particle of a certain energy impinges on the SSNTD. As this particle moves throughout the detector, it deposits its energy and create a damage path within the SSNTD plate. Each particle impinging on the detector will create a respective damage path. The damage path, or damage paths, is also referred to in the art as latent track and is the result, for instance, of the destruction of chemical bonds within the SSNTD plate. The SSNTD bearing the latent track may be referred to as a latent track SSNTD. The latent track SSNTD includes information regarding the particles, which have impinged thereon. The latent track usually cannot be directly observed. Therefore, the latent track SSNTD is usually etched. Etching entails immersing the SSNTD into a suitable chemical solution to open the latent track and make it observable by an optical microscope. Typical etchant solutions are NaOH or KOH in water or water/ethanol at 1-14 molar concentrations. The temperature may range from 40 °C to 200 °C. The time may range from between 30 minutes to 32 hours. Different particle species, or particles of a same species but having different energies, will generate different latent tracks.

Therefore, based on the latent track, the SSNTD can be used to infer how many particles impinged thereon. For instance, it could be directly measured how many particles impinged thereon. Furthermore, it may be possible to identify the species of particles (e.g., proton, alpha particle, electron, neutron, etc.) and their respective energy based on the properties of the resulting tracks. The properties of the track are for instance, the diameter of the resulting pits, track length, and visual contrast. The pit is the physical damage created on the SSNTD plate. The pit may be also referred to as hole or opening.

To correctly interpret the latent track, a calibration of the detector is usually performed. The calibration is performed by gauging the response of the SSNTD with particles of a known species and of a known energy. The calibration may also involve gauging particles of a plurality of known species, i.e., at least two particle species, and the respective known energies.

The calibration may be performed, for instance, by exposing the SSNTD detector to a physical reaction producing a known output and/or by measuring the output also with an already calibrated detector. The detector used for the calibration may be a detector of a different type with respect to the detector to be calibrated. Alternatively, the detector used for the calibration may be a detector of a same type with respect to the detector to be calibrated.

For the imaging of the latent tracks, optical microscopes are generally used. The pits are illuminated by a uniform light source that results in dark circles or ellipses. Sometimes, it may occur that the pit is imaged having a bright spot in the center.

Imaging the SSNTD plate results in obtaining a collection of n-bit (with n being for instance, 8 or 16) grayscale pictures. This picture is also referred to as SSNTD image. The grayscale pictures are matrices of pixels and contain, for instance, circularly or elliptically shaped figures of varying darkness and sizes. These figures are the digital representation of the physical pits of the SSNTD plate.

Physical pits in the SSNTD plate and hence figures in the grayscale pictures of forms different from those indicated above are also possible. For instance, dumbbell-like and/or teardrop-like shapes may also appear in the grayscale picture. This is the case, for instance, when etching is performed for a long period of time.

Based on the grayscale picture it is possible to extract the number of pits and their respective track parameters, i.e., the physical properties of the pits such as shape, diameter, radius or radii (in case of ellipses), etc. In the following, the track parameters are referred to as pit information. The track parameter may comprise at least one physical property of the pit. For instance, it may comprise only the diameter or only the shape of the respective pit. However, the track parameter may also comprise more than one physical property of the pits, for instance it may comprise both the depth of the pit and the radius of the pit.

In the art, a procedure known as Hough transform has been used to obtain the pit information. To employ the Hough transform to obtain the pit information, the edges of the pits of the track need to be found. This can be done by, for instance, employing a Sobel detection algorithm or a Canny edge detection algorithm. Other detection algorithms may also be employed. The denominator common to all the known algorithms is that a thresholding assessment of some kind needs to be performed. The particulars of the thresholding may differ though. For instance, the thresholding can be performed on the pixels of the grayscale image. Thresholding means that a pixel is considered or not considered based on whether, for instance, its grayscale value exceeds (or lies below) a certain threshold value. In other words, thresholding means that a comparison is made, based on a threshold value. The threshold value is a user input and is thus subjective.

In most cases, the detection is applied to the grayscale values of the image itself to create a binary image. However, in some cases, the thresholding is performed on another quantity. In the former case, the grayscale image is converted to a binary image by converting all pixels with a grayscale value above the threshold value, gₜₕ ∈ [0, 2*ⁿ* - 1], to white (grayscale = 1), and the remaining pixels to black (grayscale = 0). With a binary image, the edges can easily be extracted using standard edge detection algorithms.

Sinenian N. et al.: "The response of CR-39 nuclear track detector to 1-9 Me V protons", Review of Scientific Instruments, 2011, DOI: 10.1063/1.3653549 discusses the response of a CR-39 nuclear track detector to protons in the energy range of 0.92-9.28 MeV. The energy distribution of the protons in a detector is measured using a silicon surface barrier detector and discloses that once the CR-39 was exposed to protons, it was etched using a heated solution of NaOH and then scanned with an automated optical microscope system, which recorded the location, diameter, eccentricity, and optical contrast of each track. Following the scan, track attributes were analyzed. The prior art also discloses a plastic track detector in SALAMON M H ET AL: "CHARGE RESOLUTION OF PLASTIC TRACK DETECTORS USED TO IDENTIFY RELATIVISTIC NUCLEI",NUCLEAR INSTRUMENTS & METHODS IN PHYSICS RESEARCH. SECTION B: BEAM INTERACTIONS WITH MATERIALS AND ATOMS, ELSEVIER BV, NL, vol. B6, no. 3, 1 February 1985 (1985-02-01), pages 504-512, ISSN: 0168-583X.

### SUMMARY

There is however an inherent issue with thresholding when used for obtaining the pit parameters. In fact, thresholding introduces a user bias on which grayscale value should be considered as an edge of a pit or not and hence directly influences how the pit parameters are obtained. In fact, thresholding applies the same threshold value to the entire image. This skews results if the image of pits, for instance, two pits, with the same diameter have different brightness (gray scale values) in the image due for example to different lighting conditions.

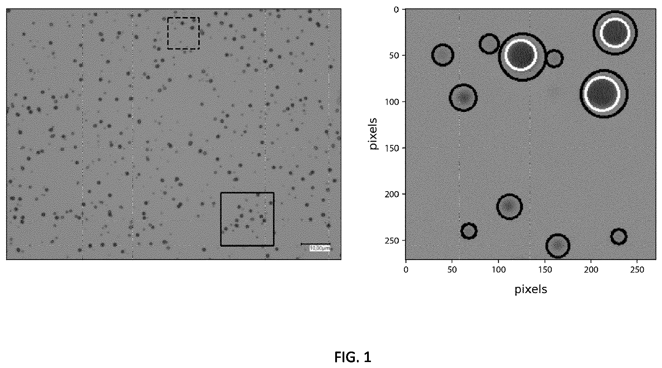

FIG. 1, left part, shows an example of a grayscale image of a 114 µm × 85 µm section of an etched CR39 plate. FIG. 1 right part depicts a zoom of the squared section in the upper central part of FIG.1, left part.

The size of the zoomed section is 10 µm × 10 µm. The black and white circles are the result of applying a Hough transform on the corresponding binary images with gₜₕ = 132 and gₜₕ = 100, respectively. The background has grayscale values around 137 - 142.

As can be seen, FIG. 1, right side, contains two families of pits, one faint and one pronounced. To distinguish the faint pits from the background, it is necessary to employ a lax threshold gₜₕ. This results in black circles in the figure upon performing the Hough transform. While practically all pits were detected, the procedure results in an overestimate of the pit diameters, especially of the more pronounced pits. More accurate pit diameters are obtained by using a stricter threshold (white circles), but then only three out of eleven pits are detected. Hence, using a single threshold value does not in general allow for the determination of accurate track properties. In theory, it could be conceivable to use several threshold values, one for each level of "faintness". But even this is not a satisfactory solution since it still introduces a user bias because pits with a diameter that slightly exceed the threshold will be grouped together as having the same diameter.

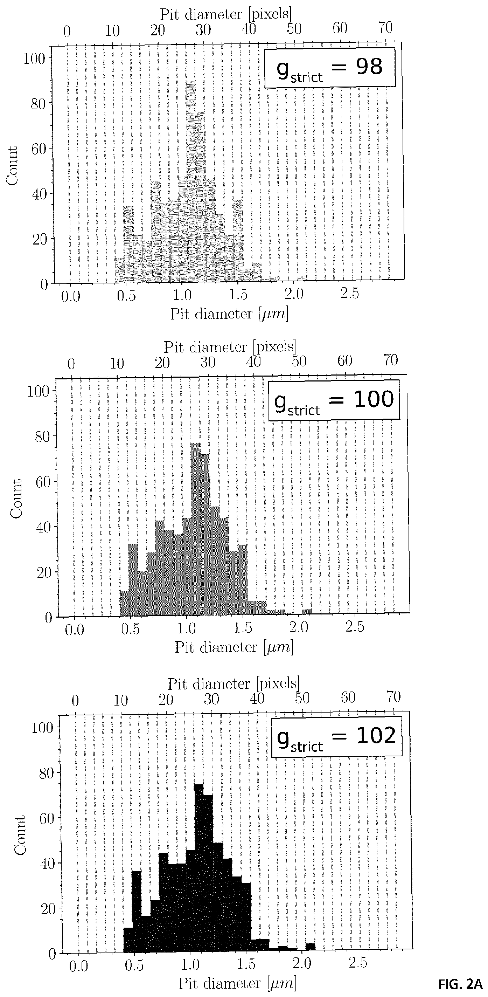

FIG. 2A shows histograms of the number of pits found as a function of their diameter, assuming circular track pits, for the total CR-39 image depicted in FIG. 1. The histograms of FIG 2A are constructed from the radii obtained from the lax threshold, where those pit radii that were also found using the strict threshold were overwritten by the radii obtained with the latter threshold. The lax threshold was the same as in FIG. 1 (gₜₕ = 132), whereas the strict threshold parameter, herein after referred to as g_{strict}, is varied slightly for the three histograms. In the diameter histograms, slight variations of the strict threshold result in different statistical behaviors. For example, the peak at *D* ≈ 1.2 *µ*m for g_{strict} = 98 is decreased of over 10% for g_{strict} > 98. Also, the peak at *D* ≈ 1.5 *µ*m for g_{strict} = 98 vanishes for g_{strict} = 102. Finally, for all histograms, there is a drop-off at *D* ≈ 1.5 *µ*m. This is an artifact. It is due to the fact that all pits with diameters slightly above this value are not seen. In fact, their diameters are erroneously reduced by the imposed strict threshold. This causes the corresponding bin at *D* ≈ 1.5 *µ*m to be artificially inflated.

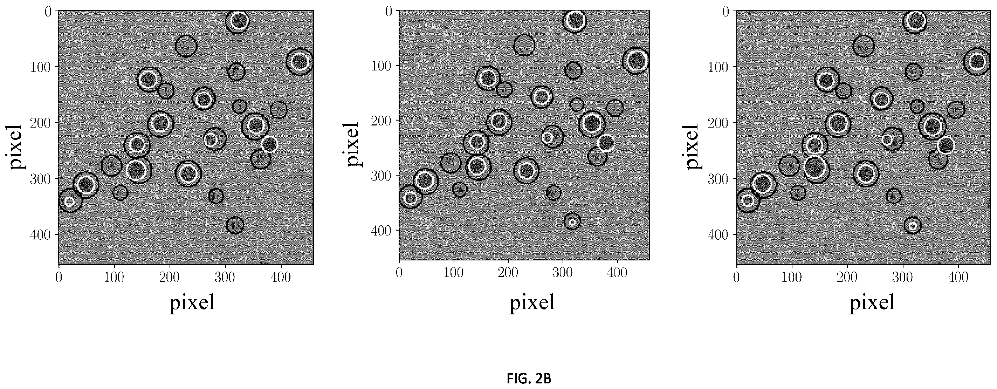

FIG. 2B illustrates the effect of the variations in the strict threshold. Particularly, it shows the zoomed in section (18 *µ*m × 18 *µ*m) of the solid black square of FIG. 1. The black and white circles depict the result of the Hough transform with the lax and strict thresholds respectively.

Substantially the same pits are detected for all the three different thresholds. Nonetheless, as it can be seen in FIG. 2B, the thresholding detection algorithm leads to the very different behaviors depicted in FIG 2A. Depending on a user-selected parameter, i.e., the threshold value, the outcomes of the pit information detection differ significantly.

Therefore, the known art has a problem in that it is difficult to reliably obtain the pit information. This, in turn, makes it difficult to reliably determine particle information, as for instance, the particle species, or the energy spectrum of the particle that impinged on the SSNTD.

Moreover, the detectors of the known art are not even always able to unambiguously determine the particle species. For instance, it is not always possible to distinguish a high energetic light particle, from a heavy low energy particle.

In view of the above, it is an object of the present disclosure to at least partially mitigate the shortcomings of the known art and to provide a method for more reliably determining particle information for at least one particle species. Moreover, according to at least certain aspects of the present disclosure, it is possible to improve the unambiguous detection of particles.

The objective of the present invention is achieved by means of the method described in claim 1. Further preferred configurations are listed in the dependent claims.

According to an aspect of the present disclosure there is provided a computer-implemented method for analyzing a solid-state nuclear track detector, SSNTD, image including pits, to determine particle information for at least one particle species. The method comprises the following steps. A first step S1, of obtaining a SSNTD image including pits. A second step, S2, of obtaining pit occurrence information from the SSNTD image, the pit occurrence information being indicative of a number of pits in the SSNTD image. A third step, S3, of obtaining first pit information from the SSNTD image, the first pit information being indicative of a physical property of the pits. A fourth step S4, of obtaining a distribution of the pit information based on the first pit information and the pit occurrence information. A fifth step, S5, of calculating an expected distribution of the first pit information for the at least one particle species based on calibration information. A sixth step S6 of comparing the expected distribution to the distribution of the pit information. A seventh step S7 of determining particle information for the at least one particle species based on the result of the comparison.

The particle information is indicative of a physical property of the at least one particle species, and the calibration information is indicative of a relationship between a second pit information and the at least one particle species at given analysis conditions.

According to this aspect it is possible to more reliably determine particle information. In fact, for instance, according to the method, it is not necessary to set a threshold value to obtain the pit information. Since a user does not need to set a thresholding value to obtain the pit information, the output of the analysis is not influenced by the subjective choice of the thresholding value.

The solid-state nuclear track detector image may be an etched poly-allyl-diglycol-carbonate, PADC, image.

The expected distribution of the first pit information may be calculated based on an assumed energy distribution of the at least one particle species and/or based on an expected distribution of energy loss statistics of the particle propagating in the SSNTD. The latter may for instance be a Langau distribution associated with the at least one particle species.

According to this aspect, it is possible to perform a forward fitting based on one or more assumptions on the particles to be measured. It is to be noted that in the vast majority of the cases it is known which particles may be expected from a given physical phenomenon and hence, in the vast majority of the cases it may be possible to make reasonable assumptions. Even in those cases in which it is not known a priori which particles may be expected, this could easily be found out by employing other, known detectors. Therefore, also in this case it is possible to make reasonable assumptions.

In case there are M particle species the method may further comprise the steps of: - calculating, S5a, M expected distributions of the first pit information for each of the M particle species based on calibration information, - summing, S5b, up the M expected distributions of the first pit information - comparing, S6a, the sum of the M expected distributions of the first pit information to the distribution of the pit information.

The particle information may be the energy distribution of the given particle species. For instance, the particle information may be the energy spectrum of the given particle species. According to another example the particle information may be the particle species. For instance, the particle information may be the recognition that the particle impinging on the SSNTD were of a given species. For instance, the species, or type, of a particle may be for instance, protons, electrons, alpha particles and the like.

According to an aspect of the disclosure, the method also comprises the following. The step of comparing the expected distribution of the first pit information to the pit information to determine the particle information comprises varying at least one parameter relating to the expected distribution so as to minimize an error function. Preferably the error function is a root-mean-square, or *χ*2 deviation function, or a logarithmic *χ*2 function.

According to an aspect of the present disclosure, the method further comprises:
- obtain at least two SSNTD images, each of the at least two SSNTD image having been obtained at different filtering conditions, and
- obtain, for each of the at least two SSNTD images, information regarding the respective filtering conditions.

According to an aspect of the present disclosure the step of obtain pit information from the SSNTD image comprises, for each pit, the steps of: - obtain information relating to a center of the pit by analyzing a grayscale of pixels of the obtained SSNTD image, and obtain the pit information based on the information relating to a center of the pit.

According to an aspect of the present disclosure the pit occurrence information is the number of the pits in the SSNTD image. The pit information is either a diameter of the pit at half-width-half-maximum, or a radius of the pit at half-width-half-maximum.

According to an aspect of the present disclosure, the method further comprises the steps of generating for each pit a respective mathematical model of the pit based on the SSNTD image and on the center of the pit, and extracting, for each pit, a given quantity from the generated mathematical model, the given quantity being a same type of quantity for all the pits and being extracted at a same value of the mathematical model for all the pits.

According to an aspect of the present disclosure, the center of the pit is found via a Hough transform.

According to an aspect of the present disclosure, the line-out is either a line or a radial average.

According to an aspect of the present disclosure, there is provided a data processing apparatus comprising means for carrying out the steps of any of the methods described above. According to another aspect of the present disclosure, there is provided a computer program comprising instructions, which, when the program is executed by a computer, cause the computer to carry out the steps of any of the methods described above.

### BRIEF DESCRIPTION OF THE DRAWINGS

FIG. 1 shows a CR-39 image and the pits detected therein according to a fixed thresholding approach of the known art.
FIG. 2A shows histograms obtained according to the thresholding method of the known art employing different thresholding values on the CR-39 image of FIG. 1.
FIG. 2B shows, for each of the histograms of FIG. 2A, the pits detected in the enlarged portion of the CR-39 image of FIG. 1.
FIG. 3 shows a method according to the present disclosure.
FIG. 4 schematically shows a method for determining an expected distribution dN/dr.
FIG. 5 shows an example of a calibration curve.
FIG. 6 shows a histogram obtained according to the method of the present disclosure.
FIG. 7 shows another histogram obtained according to the method of the present disclosure.

### DETAILED DESCRIPTION

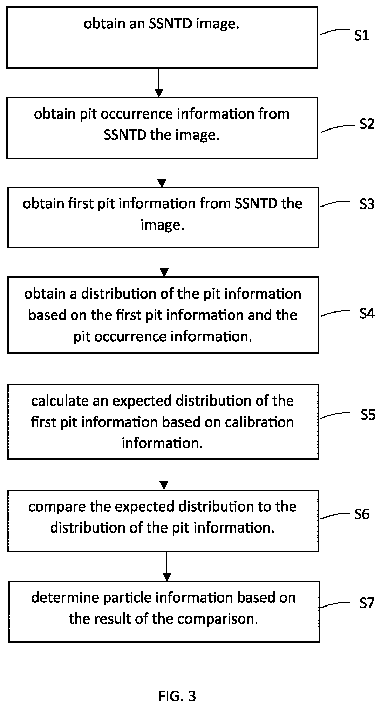

FIG. 3 schematically illustrates a method for analyzing a solid-state nuclear track detector, SSNTD, image including a latent track in the form of pits according to the present disclosure. According to a specific example, the SSNTD may be a CR-39 detector.

According to the method it is possible to determine particle information for at least one particle species emitted by a particle source. However, in the general case, the method makes it possible to determine particle information for more than one particle species. For instance, it makes it possible to determine particle information for two different particle species and more generally for multiple particle species. For instance, for M particle species. M is an integer number larger than 1. For instance, M may be equal to 2, 3, 4 and so on.

Particles, or particle species, as used herein may mean any kind of quanta, and thus includes gamma rays, neutrons, protons, electrons, alpha particles, and ions among others. Preferably, however, particles or particle species may mean charged heavy particles such as protons, alpha particles, and ions. Accordingly, preferably, neutrons, radiation and electrons are not encompassed by the term particles or particle species since they are usually quite difficult to detect, for instance, with a CR-39.

The particle source may be for instance a material undergoing a fission or fusion process. However, generally, it may be any source of particle emitting source.

The method for analyzing the SSNTD comprises a first step, S1, of acquiring a SSNTD image including pits. The acquired SSNTD image may for instance be the physical SSNTD plate or may be a digital representation, for instance a pixel representation, thereof. That is, for instance according to the method, it may be possible to digitally acquire a pixel matrix whose grayscale represents, or is indicative of, the SSNTD plate. Alternatively, it may be possible to physically record, for instance take a picture of, a physical SSNTD plate. That is, it may be possible to physically record the latent track SSNTD.

In a second step, S2, pit occurrence information is obtained from the SSNTD image. The pit occurrence information is information indicative of the pixel count in the SSNTD image. For instance, the pit occurrence information may be the number of pits in the SSNTD image. That is, the number of pits in the SSNTD image may be counted. Alternatively, the pit occurrence information may be information that directly enables to determine the number of pits in the SSNTD image.

In a third step, S3, first pit information is obtained from the SSNTD image. The first pit information is information indicative of a physical property of the pits. For instance, the first pit information may be indicative of, or correspond to, the radius, the diameter or the circumference of the pits. However, the first pit information is not limited thereto, and it may be indicative of other parameters of the pits as for instance the depth of the pit.

For ease of explanation in the following, reference will be at times made to the diameter of the pit. However, it shall be understood that this is only an example of pit parameter and that other physical properties of the pit may be used instead.

According to a particular implementation the first pit information may be the radius, or the diameter of the pit.

The first pit information may, for instance, be obtained by creating, for each pit, a mathematical model of the pit based on the SSNTD image and by extracting a given quantity from the created mathematical model. The extracted given quantity may be the same quantity for each of the mathematical models associated with each respective pits of the SSNTD. For each pit, the given quantity may be extracted at a same value from the mathematical model. The mathematical model may be found by fitting an analytic function which best describes the grayscale distribution. This function may be, according to some examples, the upside-down Gaussian or an Airy function.

For instance, the given quantity may be the radius, or the diameter taken at half-width-half-maximum, HWHM, of the mathematical model describing the pit. An example of a possible mathematical model, an upside-down Gaussian, is discussed later on. Other quantities are of course possible, for instance it may be possible to create a mathematical model of the circumference of the pit and extract the circumference of the pit at a given height from the mathematical model.

The radius or the diameter may also be extracted from a different height of the mathematical model. For instance, it may be possible to take the radius or the diameter to be the half-width at a different fraction of the maximum than a half, such as for instance ¾ or ¼. The advantage of this approach is that the pit parameter can be obtained in an objective manner for all the pits of the SSNTD image without depending on a subjective user input, as for instance, the value of a thresholding parameter. Once a subjective choice about the objective manner of obtaining the parameter has been taken, i.e., whether to use the HWHM, HW-¾-M, or the HW-¼-M to determine the radius or the diameter, no other subjective choices need to be taken by the user. Notably, no selection of a thresholding value for the pit parameter needs to be taken. According to the present disclosure, a threshold is at best only needed to determine the pit occurrence information when, for instance, the pit occurrence information is determined by using a Hough transform.

In a fourth step S4, a distribution of the pit information is obtained based on the first pit information and the pit occurrence information. For instance, the first pit information and the pit occurrence information may be combined in a histogram. The histogram may be divided in a plurality of ranges. Each range may be indicative of possible pit parameters of the pits. For each of the ranges, the histogram may indicate the number of pits having a pit parameter falling within the range. The distribution of the pit information may hence be represented as a histogram. Other equivalent representations as, for instance, density curves, or kernel density estimations are also possible. The histogram ranges may be selected based on statistics and noise. The Freedman-Diaconis rule may be taken into account when selecting the ranges.

According to a fifth step S5, an expected distribution of the pit information for at least one particle species is for instance calculated as discussed in detail below. In case the distribution of the pit information is represented as a histogram, the expected distribution may also be represented as a histogram. In case of M particle species, it may be possible to calculate a respective expected distribution of the pit information for each of the M particle species. That is, it is possible to calculate M distributions of the pit information. Each of the M distributions being relative to a given particle species. It is to be noted that even in the case of M particle species only a single first pit information and only a single pit occurrence information are obtained. Hence only a single distribution of the pit information, common for all the M particle species, is obtained.

The expected distribution is obtained or calculated based on calibration information. The calibration information may be collected according to the conventional techniques. The calibration information is indicative of a relationship between a second pit information and at least one particle species at given analysis conditions. The second pit information may be the same type of the first pit information. However, it need not to be the same and it may be a different physical property of the pit. For instance, the first pit information may be the diameter of the pit measured during experimental conditions and the second pit information may be the circumference of the pit measured under calibration conditions.

The calibration information may include for instance, for the at least one particle species: (i) information regarding the energy loss statistics (Landau functions), (ii) measurements of pit growth vs. etch parameters (etch time and/or etchant temperature).

This is advantageous since it is expected that measurement of pit information, for instance the pit diameter, radius and/or depth with respect to the etch parameters facilitates measurement of full stopping information (range and deposited energy) for the ions. This in turn may make it possible, or at least easier, to infer the particle mass and particle energy for each measured pit to obtain the particle energy distribution (spectrum) without the need for any information regarding the particle source.

The analysis conditions may for instance be the etching conditions and information pertaining the device, i.e., the microscope, used to image the SSNTD. The analysis condition may also include information about single-particle energy loss statistics in a thin SSNTD layer. The analysis conditions may in other words include information regarding a Landau distribution of the specific particle species. In case of M particle species, the analysis condition may include information regarding a Landau distribution for each of the M particle species.

The expected distribution may also be obtained based on information regarding the particle source. The information regarding the particle source may be for instance the physical phenomenon giving rise to particle emission. For instance, the information regarding the particle source may be that the particles are generated via laser-induced fusion, via nuclear decay and so on. According to another example the information regarding the particle source may relate to the species of particles that are expected to be produced by the particle source. For instance, in case the particle source is a fusing material, the information regarding the particle source may relate to the species of particles, for instance protons, which are expected to be produced by the fusion reaction.

In case of M particle species, the calibration information is indicative of M relationships between respective second pit information and each of the M respective particle species at respective M analysis conditions. In this case, the M second pit information need not be all the same type of pit information and may represent in principle different property of the respective pits. For instance, a first second pit information may be the diameter of the pit measured during first calibration conditions and another second pit information may be the circumference of the pit measured under different calibration conditions.

The M analysis conditions may be the same for all the M particle species, however they need not all be the same for all the M particle species. For instance, the analysis conditions may be different for each particle species of the M particle species. Alternatively, the analysis conditions may be the same for a subset of the particle species.

According to a specific example, in case of laser-driven ion emission spectra from a solid target it can be assumed that the ion emission spectrum is exponentially decaying, since this is usually the case. The particle spectra can therefore be described by a Boltzmann equation: $\frac{dN}{dE} = \frac{{N}_{0}}{E} exp \left(-E/{k}_{B}T\right) ,$ (1) or a modification thereof in case, for instance, of isothermal plasma expansion. $\frac{dN}{dE} = \frac{{N}_{0}}{{\left[2{Ek}_{B}T\right]}^{1 / 2}} exp \left(-\sqrt{2 E / {k}_{B} T}\right) ,$ (2) wherein N₀ is the total particle yield and k_{b}T describes the slope of the spectrum, where k_{b} is the Boltzmann constant and T the temperature.

These assumptions may be employed to determine for instance the shape of the expected distribution, therefore determining the number of free parameters describing the expected distribution. In the example considered above, the free parameters are N₀ and k_{b}T. Analogously for the case of M particle species, these assumptions may be used to determine the shapes of the expected distributions and hence determine the number of free parameters describing each of the M distributions. Assuming each of the particle species follows the Boltzmann or the modified Boltzmann equation the free parameters are N₀ᵢ and, k_{b}Tᵢ with i being comprised between 1 and M. Hence for M particle species there are a total of 2M free parameters.

In a sixth step S6, the expected distribution may be compared to the distribution of the pit information to determine particle information for the at least one particle species.

The comparison may involve minimizing the difference of the two distributions. Hence, according to the specific example provided above, it may involve determining N₀ and k_{b}T and hence determine a best fit.

In the case of M particle species, the M expected distributions may be compared to the distribution of the pit information. For instance, the M expected distributions may be summed together so as to obtain a cumulative expected distribution and hence determine the best fit. This may be achieved by comparing the summed expected distribution to the distribution of the pit information.

By obtaining the cumulative expected distribution the procedure of obtaining the best fit is the same as that explained above in connection with a single particle species. The only difference is the number of free parameters involved in the best fit. Therefore, in the following the best fit will be explained in connection with a single particle species.

The best fit may be obtained for instance by minimizing a logarithmic *χ*2 function or criterion. In the following an example of a modified, logarithmic *χ*2 criterion is described. The *χ* may be minimized for each histogram of the measured and expected distribution of pit information. In this case *χⱼ* for a given histogram j is calculated as the squared difference between measured and calculated counts, summed over all diameters from a user chosen minimum diameter *D*ₘᵢₙ to the maximum diameter *D*ₘₐₓ. Afterwards, it is normalized by the total calculated counts as a weighing factor. The +1 in the formula is beneficial to avoid undefined behavior. The total difference *χ* may be then calculated as the sum of squares of the individual *χ*ⱼ. ${χ}_{j} = ln \left[1+\frac{{\sum }_{i = {D}_{min}}^{{D}_{max}} {\left({measured}_{i}-{calc}_{i}\right)}^{2}}{{\sum }_{i = {D}_{min}}^{{D}_{max}} {calc}_{i}}\right] ,$ (3)

The *χ*2 optimization may for instance be performed via a Monte Carlo sampling. Alternatively, it may be possible carry out more advanced optimization procedures such as Markov chain Monte Carlo, Bayesian inference, etc.

The particle information is indicative of a physical property of particles associable to respective pits in the SSNTD image. For instance, the particle information may be the particle species or the energy distribution of the given particle species. The particle species may be for instance, proton, electron, alpha particles and so on.

In case of M particle species, it may be possible to obtain M respective particle information, each of one relative to a corresponding particle species of the particle species.

For a given particle, for instance, for a given ion, the energy loss probability in a material such as a SSNTD plate, is described by a Landau or Landau-Vavilov distribution. Or representations of energy loss probability distributions are a Gaussian distribution or a convolution of a Gaussian and a Landau distribution, which is referred to as "Langau" distribution. The pit information, and hence the measured pit distribution, is the result of not only the particle energy spectra times the calibration curve, but also of the convolution with a Landau (or Gaussian, Langau, etc.) distribution corresponding to the given particle energy and species. Therefore, according to an aspect of the present disclosure the expected distribution of the first pit information is calculated based on an assumed energy distribution of the at least one particle species. Alternatively, or additionally, the expected distribution of the first pit information is calculated based on a Landau, Gaussian or Langau distribution associated with the at least one particle species.

According to a specific example, and assuming an initial assumption on the particle spectrum *dN*/*dE* can be made (for instance a Boltzmann distribution or a modification thereof), the expected distribution dN/dr may be calculated as follows: $\frac{dN}{dr} = {\sum }_{i = 1}^{M} \left(\frac{dN}{dE}\times \frac{dE}{dr}\right) ∗ L \left(r\right)$ (4)

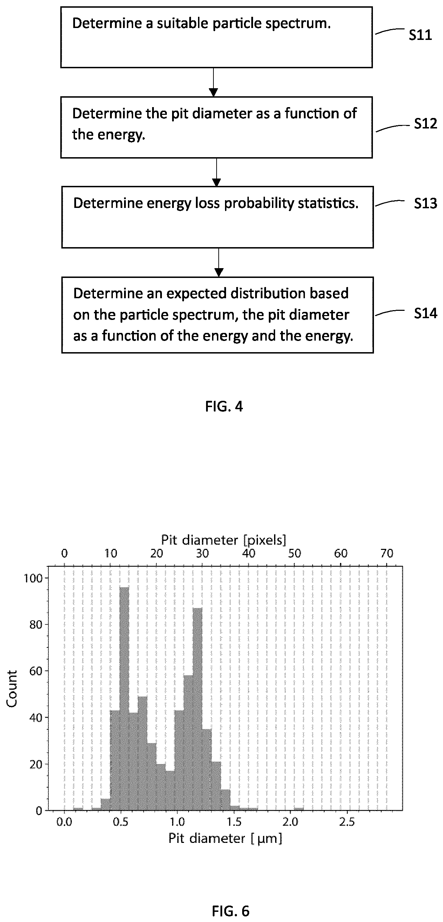

In other words, the particle spectrum *dN*/*dE* is multiplied by the distribution of pit diameter vs. energy *dE*/*dr,* the calibration information, and the resulting product is then convoluted with a Landau (or Langau) distribution L(r) to include the energy loss probability statistics. The summatory is taken over all particle species, e.g., protons, carbon (or boron), and alpha particles. This method for determining the expected distribution dN/dr is also schematically depicted in FIG. 4. According to a first step S11 a suitable particle spectrum *dN*/*dE* is determined. According to a second step S12 the pit diameter as a function of the energy *dE*/*dr* is determined. According to a third step energy loss probability statistics is determined. According to a fourth step S14 an expected distribution based on the particle spectrum, the pit diameter as a function of the energy and the energy is determined.

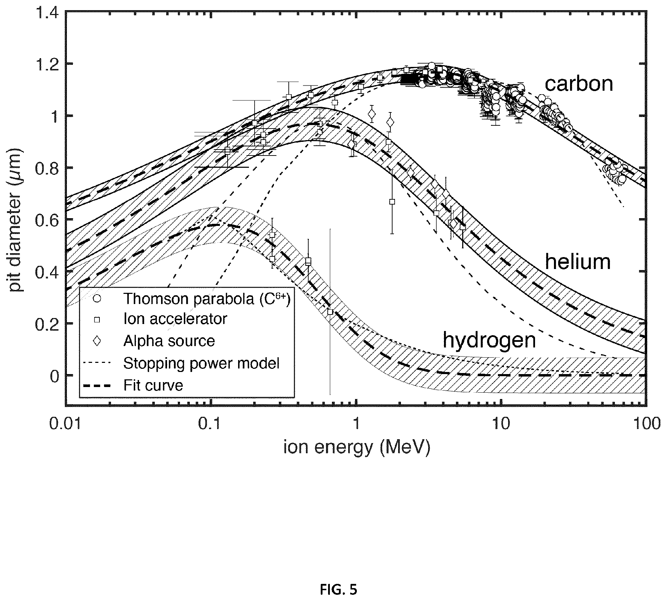

FIG. 5 shows an example of calibration information and particularly calibration curves. As it can be seen, the calibration is not bijective, i.e., there are two possible energy values for a given pit diameter. Moreover, it can also be seen that the calibration curves for different particles partly overlap, i.e., there are two possible species for a given pit diameter. Therefore, a direct assignment of a measured pit diameter to a certain particle at a certain energy is not possible. Additionally, due to energy loss statistics, a particle at a given energy may create a pit with a diameter corresponding to the same particle at a different energy, making it difficult to assign particle energy from pit diameter alone even for single-species irradiation. The method presented in this disclosure takes this into account to assign the best match to the measured distributions.

FIG. 6 exemplarily shows a histogram of number of pits found as a function of their diameter for the total CR-39 image depicted in Fig. 1, left side, using the method of the present disclosure. As can be seen and in contrast to FIG. 2A, the method according to the present disclosure enables detection of two distinct peaks at around 0.5 and 1.2 µm.

According to an aspect of the present disclosure, the step, S3, of obtaining pit information from the SSNTD image may comprise, for each pit, the following two steps. A step S3a of obtaining information relating to a center of the pit. For instance, the step S3a may be carried out by analyzing a grayscale of pixels of the obtained SSNTD image. A step S3b of obtaining the pit information based on the information relating to a center of the pit. According to an example the pit information may be obtained by taking the following reasoning into account. A Hough transform may be employed to obtain the center of the pit. An idealized, circular pit or opening is darkest in the center. As one traces a lineout through the pit center, the encountered grayscale values vary from background over gradually crossing the pit boundary until a minimum is reached at the center. Subsequently, continuing along the lineout, a symmetrically mirrored behavior may be expected as one moves from the pit back to the background. The gradient is given by the point spread function of the microscope, which typically is described by an Airy function. The lineout is a plot of a subsection of the two-dimensional grayscale data, along a line. The lineout is hence a one-dimensional plot of pixel gray scale value against pixel (one-dimensional) position.

For an exemplified analytic treatment, it may be useful to take an upside-down Gaussian: $f \left(x, A, μ, σ, B\right) = A \left[1-{e}^{- \frac{1}{2} {\left(\frac{x - μ}{σ}\right)}^{2}}\right] + B ,$ (5) where *B* is the minimal height of the function at *x = µ, A + B* is the height of the tails of the function, and *µ* and *σ*² are the conventional mean and variance.

In a realistic scenario some more considerations may be required. For instance, the pixels will not perfectly follow a Gaussian-like behavior. For instance, some brighter pixels may show up near the center. To possibly mitigate this noise, instead of taking the lineout, a radial averaging may be taken. Starting from the center, concentric circular shells of increasing radii, may be defined, in integer steps of the pixel size and the grayscale values therein may be averaged.

Second, the center pixel is not always the darkest one for any given pit. This offset needs to be accounted for by allowing |µ| to deviate from zero, resulting in a bias-free definition for the pit radius by assigning it to the half-width at half-maximum (HWHM) of the Gaussian: ${r}_{HWHM} = \left|μ\right| + \sqrt{\left(2 ln\left(2\right)\right)} σ ,$ (6) where σ > 0. Note that the HWHM-radius, as it arises from a fit, can take on rational values, despite it being represented in unit of pixels. This allows for super-resolution binning in subsequent count histograms.

The upside-down Gaussian is an example of the mathematical model and is especially suitable to model circular pits. Pits of different shapes may be modelled by taking the particularity of their form into account. For instance, in case the SSNTD image also includes pits of elliptical shape, the upside-down Gaussian may be adapted accordingly.

According to a specific example, the diameter may be obtained as follows. The center of the pit is obtained by performing a Hough transform. The pit is modelled as an upside-down Gaussian. Subsequently, the radius or diameter of the pit may be found with the HWHM method. The edges of the pit may be obtained for instance with a Canny detection algorithm. The same method is always used to measure the width of all the pits. Moreover, the same method may be used on a pit-by-pit basis to account for brightness variations from pit to pit.

### Additional embodiments

According to an embodiment of the present disclosure, a filter foil may be placed between the SSNTD and the particle source. The filter foil acts like a high pass filter: all particles with energies above the filter threshold are transmitted, while ions below the threshold are blocked. It is to be noted that the presence of the filter does not *per se* alter the type of energy distribution of the particles. For instance, exponential particle spectra before the filter are still exponential after the filter. This results in a broad distribution of pits for each particle species. The pit information obtained can be described by the product of the energy spectrum of the particle species after the filter times the calibration curve relating to that specific particle species.

According to an embodiment it may be possible to obtain at least two SSNTD images relating to a same particle source. Each of the at least two SSNTD images may have been obtained at different filtering conditions. Different filtering conditions include for instance different thickness of the filter foil placed between the particle source and the SSNTD, different material of the filter foil, and the like.

Based on information regarding the filtering conditions for each of the two SSNTD images, it is possible to increase the sensitivity to the spectral shape of the particle species.

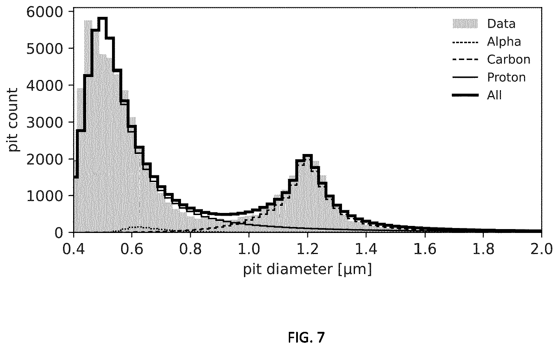

FIG. 7 exemplarily shows another histogram of number of pits found as a function of their diameter for a CR39 detector covered with a 1 micrometer Mylar filter. The histogram was extracted starting from 100 microscope images instead of a single one. As it can be seen, thanks to the method of the present disclosure, it is possible to resolve three different particle species.

This is especially the case when the at least two SSNTD images are obtained at spatially adjacent locations. For instance, the at least two SSNTD are next to each other. In this manner, the effect of possible anisotropic emission can be minimized.

According to some aspects of the disclosure, the first pit information and/or the second pit information may for instance be an eccentricity of the pit. Alternatively, it may be a major axis and/or a minor axis at a given height. This may be particularly suitable in case the pits are of elliptical, rather than circular shape.

According to an aspect of the disclosure, there is provided a data processing apparatus comprising means for carrying out the steps of any of the methods described above.

According to another aspect of the disclosure, there is provided a computer program comprising instructions, which, when the program is executed by a computer, cause the computer to carry out the steps of any of the methods described above.

## Claims

1. A computer-implemented method for analyzing a solid-state nuclear track detector, SSNTD, image including pits, to determine particle information for at least one particle species, the method comprising the steps of:
- obtain (S1) a SSNTD image including pits,
- obtain (S2) pit occurrence information from the SSNTD image, the pit occurrence information being indicative of a number of pits in the SSNTD image,
- obtain first pit information (S3) from the SSNTD image, the first pit information being indicative of a physical property of the pits,
- obtain (S4) a distribution of the pit information based on the first pit information and the pit occurrence information, **characterized in that** the method further comprises the steps of:
- calculate (S5) an expected distribution of the first pit information for the at least one particle species based on calibration information,
- compare (S6) the expected distribution to the distribution of the pit information,
- determine (S7) particle information for the at least one particle species based on the result of the comparison, the particle information being indicative of a physical property of the at least one particle species, and the calibration information being indicative of a relationship between a second pit information and the at least one particle species at given analysis conditions.

2. The method of claim 1, wherein the solid-state nuclear track detector image is an etched poly-allyl-diglycol-carbonate, PADC, image.

3. The method of any of the previous claims, wherein the expected distribution of the first pit information is calculated based on an assumed energy distribution of the at least one particle species and/or based on the energy loss distribution associated with the at least one particle species.

4. The method of claim 3 wherein there are M particle species, further comprising the steps of:
- calculating (S5a) M expected distributions of the first pit information for each of the M particle species based on calibration information,
- summing up (S5b) the M expected distributions of the first pit information,
- comparing (S6a) the sum of the M expected distributions of the first pit information to the distribution of the pit information.

5. The method of any of the previous claims, wherein the particle information is the energy distribution of the given particle species.

6. The method of any of the previous claims, wherein, the step of comparing the expected distribution of the first pit information to the pit information to determine the particle information comprises varying at least one parameter relating to the expected distribution so as to minimize an error function, wherein preferably the error function is a root-mean-square or *χ*2 deviation function, or a logarithmic *χ*2 function.

7. The method of any of the previous claims further comprising:
- obtain at least two SSNTD images, each of the at least two SSNTD image having been obtained at different filtering conditions, and
- obtain, for each of the at least two SSNTD images, information regarding the respective filtering conditions.

8. The method of any of the previous claims, wherein the step of obtain pit information from the SSNTD image comprises, for each pit, the steps of:
- obtain information relating to a center of the pit by analyzing a grayscale of pixels of the obtained SSNTD image, and
- obtain the pit information based on the information relating to a center of the pit.

9. The method of claim 8, wherein the pit occurrence information is the number of the pits in the SSNTD image, and wherein the pit information is either
- a diameter of the pit at half-width-half-maximum, or
- a radius of the pit at half-width-half-maximum.

10. The method of any one of claims 8 or 9, comprising the steps of:
generating for each pit a respective mathematical model of the pit based on the SSNTD image and on the center of the pit,
extracting, for each pit, a given quantity from the generated mathematical model, the given quantity being a same type of quantity for all the pits and being extracted at a same value of the mathematical model for all the pits.

11. The method of any one of claims 8 to 10, wherein the center of the pit is found via a Hough transform.

12. The method of claim 11, wherein the line-out is either a line or a radial average.

13. A data processing apparatus comprising means for carrying out the steps of the method of any of the previous claims.

14. A computer program comprising instructions, which, when the program is executed by a computer, cause the computer to carry out the steps of any of claims 1 to 12.

## Patentansprüche

1. Computerimplementiertes Verfahren zum Analysieren eines Bilds eines Festkörper-Kernspurdetektors, SSNTD, das Pits enthält, um Teilcheninformationen für mindestens eine Teilchenspezies zu bestimmen, wobei das Verfahren die folgenden Schritte umfasst:
- Erhalten (S1) eines SSNTD-Bilds, das Pits enthält,
- Erhalten (S2) von Pit-Auftrittsinformationen aus dem SSNTD-Bild, wobei die Pit-Auftrittsinformationen eine Anzahl von Pits in dem SSNTD-Bild angeben,
- Erhalten erster Pit-Informationen (S3) aus dem SSNTD-Bild, wobei die ersten Pit-Informationen eine physikalische Eigenschaft der Pits angeben,
- Erhalten (S4) einer Verteilung der Pit-Informationen basierend auf den ersten Pit-Informationen und den Pit-Auftrittsinformationen, **dadurch gekennzeichnet, dass** das Verfahren ferner die folgenden Schritte umfasst:
- Berechnen (S5) einer erwarteten Verteilung der ersten Pit-Informationen für die mindestens eine Teilchenspezies basierend auf Kalibrierungsinformationen,
- Vergleichen (S6) der erwarteten Verteilung mit der Verteilung der Pit-Informationen,
- Bestimmen (S7) von Teilcheninformationen für die mindestens eine Teilchenspezies basierend auf dem Ergebnis des Vergleichs, wobei die Teilcheninformationen eine physikalische Eigenschaft der mindestens einen Teilchenspezies angeben und die Kalibrierungsinformationen eine Beziehung zwischen zweiten Pit-Informationen und der mindestens einen Teilchenspezies bei gegebenen Analysebedingungen angeben.

2. Verfahren nach Anspruch 1, wobei das Festkörper-Kernspurdetektorbild ein geätztes Polyallyldiglykolcarbonat-, PADC-, Bild ist.

3. Verfahren nach einem der vorhergehenden Ansprüche, wobei die erwartete Verteilung der ersten Pit-Informationen basierend auf einer angenommenen Energieverteilung der mindestens einen Teilchenspezies und/oder basierend auf der mit der mindestens einen Teilchenspezies assoziierten Energieverlustverteilung berechnet wird.

4. Verfahren nach Anspruch 3, wobei es M Teilchenspezies gibt, ferner umfassend die folgenden Schritte:
- Berechnen (S5a) von M erwarteten Verteilungen der ersten Pit-Informationen für jede der M Teilchenspezies basierend auf Kalibrierungsinformationen,
- Aufsummieren (S5b) der M erwarteten Verteilungen der ersten Pit-Informationen,
- Vergleichen (S6a) der Summe der M erwarteten Verteilungen der ersten Pit-Informationen mit der Verteilung der Pit-Informationen.

5. Verfahren nach einem der vorhergehenden Ansprüche, wobei die Teilcheninformationen die Energieverteilung der gegebenen Teilchenspezies sind.

6. Verfahren nach einem der vorhergehenden Ansprüche, wobei der Schritt des Vergleichens der erwarteten Verteilung der ersten Pit-Informationen mit den Pit-Informationen, um die Teilcheninformationen zu bestimmen, das Variieren mindestens eines Parameters in Bezug auf die erwartete Verteilung umfasst, um eine Fehlerfunktion zu minimieren, wobei die Fehlerfunktion vorzugsweise eine quadratische oder *χ*2-Abweichungsfunktion oder eine logarithmische *χ*2-Funktion ist.

7. Verfahren nach einem der vorhergehenden Ansprüche, ferner umfassend:
- Erhalten von mindestens zwei SSNTD-Bildern, wobei jedes der mindestens zwei SSNTD-Bilder unter verschiedenen Filterbedingungen erhalten wurde, und
- Erhalten, für jedes der mindestens zwei SSNTD-Bilder, von Informationen bezüglich der jeweiligen Filterbedingungen.

8. Verfahren nach einem der vorhergehenden Ansprüche, wobei der Schritt des Erhaltens von Pit-Informationen aus dem SSNTD-Bild für jeden Pit die folgenden Schritte umfasst:
- Erhalten von Informationen, die sich auf eine Mitte des Pits beziehen, durch Analysieren einer Graustufe von Pixeln des erhaltenen SSNTD-Bildes, und
- Erhalten der Pit-Informationen basierend auf den Informationen, die sich auf eine Mitte des Pits beziehen.

9. Verfahren nach Anspruch 8, wobei die Pit-Auftrittsinformationen die Anzahl der Pits in dem SSNTD-Bild sind, und wobei die Pit-Informationen entweder
- ein Durchmesser des Pits bei Halbbreiten-Halbmaximum, oder
- ein Radius des Pits bei Halbbreiten-Halbmaximum sind.

10. Verfahren nach einem der Ansprüche 8 oder 9, umfassend die folgenden Schritte:
Erzeugen für jedes Pit eines jeweiligen mathematischen Modells des Pits basierend auf dem SSNTD-Bild und auf der Mitte des Pits,
Extrahieren für jedes Pit einer gegebenen Größe aus dem erzeugten mathematischen Modell, wobei die gegebene Größe ein gleicher Größentyp für alle Pits ist und bei einem gleichen Wert des mathematischen Modells für alle Pits extrahiert wird.

11. Verfahren nach einem der Ansprüche 8 bis 10, wobei die Mitte des Pits über eine Hough-Transformation gefunden wird.

12. Verfahren nach Anspruch 11, wobei das Line-out entweder eine Linie oder ein radialer Durchschnitt ist.

13. Datenverarbeitungsvorrichtung, umfassend Mittel zum Ausführen der Schritte des Verfahrens nach einem der vorhergehenden Ansprüche.

14. Computerprogramm, umfassend Anweisungen, die, wenn das Programm von einem Computer ausgeführt wird, den Computer veranlassen, die Schritte nach einem der Ansprüche 1 bis 12 auszuführen.

## Revendications

1. Procédé mis en œuvre par ordinateur pour analyser une image de détecteur de piste nucléaire à semi-conducteurs, SSNTD, comprenant des creux, pour déterminer des informations de particules pour au moins une espèce de particules, le procédé comprenant les étapes consistant à :
- obtenir (S1) une image SSNTD comprenant des creux,
- obtenir (S2) des informations d'occurrence de creux à partir de l'image SSNTD, les informations d'occurrence de creux étant indicatives d'un nombre de creux dans l'image SSNTD,
- obtenir des premières informations de creux (S3) à partir de l'image SSNTD, les premières informations de creux étant indicatives d'une propriété physique des creux,
- obtenir (S4) une distribution des informations de creux sur la base des premières informations de creux et des informations d'occurrence de creux, **caractérisé en ce que** le procédé comprend en outre les étapes consistant à :
- calculer (S5) une distribution attendue des premières informations de creux pour l'au moins une espèce de particules sur la base d'informations d'étalonnage,
- comparer (S6) la distribution attendue à la distribution des informations de creux,
- déterminer (S7) des informations de particules pour l'au moins une espèce de particules sur la base du résultat de la comparaison, les informations de particules étant indicatives d'une propriété physique de l'au moins une espèce de particules, et les informations d'étalonnage étant indicatives d'une relation entre des secondes informations de creux et l'au moins une espèce de particules à des conditions d'analyse données.

2. Procédé selon la revendication 1, dans lequel l'image de détecteur de piste nucléaire à semi-conducteurs est une image de poly-allyl-diglycol-carbonate, PADC, gravée.

3. Procédé selon l'une quelconque des revendications précédentes, dans lequel la distribution attendue des premières informations de creux est calculée sur la base d'une distribution d'énergie supposée de l'au moins une espèce de particules et/ou sur la base de la distribution de perte d'énergie associée à l'au moins une espèce de particules.

4. Procédé selon la revendication 3, dans lequel il existe M espèces de particules, comprenant en outre les étapes consistant à :
- calculer (S5a) M distributions attendues des premières informations de creux pour chacune des M espèces de particules sur la base d'informations d'étalonnage,
- additionner (S5b) les M distributions attendues des premières informations de creux,
- comparer (S6a) la somme des M distributions attendues des premières informations de creux à la distribution des informations de creux.

5. Procédé selon l'une quelconque des revendications précédentes, dans lequel les informations de particules sont la distribution d'énergie de l'espèce de particules donnée.

6. Procédé selon l'une quelconque des revendications précédentes, dans lequel l'étape de comparaison de la distribution attendue des premières informations de creux aux informations de creux pour déterminer les informations de particules comprend la variation d'au moins un paramètre relatif à la distribution attendue de manière à minimiser une fonction d'erreur, dans lequel de préférence la fonction d'erreur est une fonction d'écart quadratique moyen ou χ2, ou une fonction χ2 logarithmique.

7. Procédé selon l'une quelconque des revendications précédentes, comprenant en outre les étapes consistant à :
- obtenir au moins deux images SSNTD, chacune des au moins deux images SSNTD ayant été obtenue à différentes conditions de filtrage, et
- obtenir, pour chacune des au moins deux images SSNTD, des informations concernant les conditions de filtrage respectives.

8. Procédé selon l'une quelconque des revendications précédentes, dans lequel l'étape d'obtention d'informations de creux à partir de l'image SSNTD comprend, pour chaque creux, les étapes consistant à :
- obtenir des informations relatives à un centre du creux en analysant une échelle de gris de pixels de l'image SSNTD obtenue, et
- obtenir les informations de creux sur la base des informations relatives à un centre du creux.

9. Procédé selon la revendication 8, dans lequel les informations d'occurrence de creux sont le nombre de creux dans l'image SSNTD, et dans lequel les informations de creux sont soit
- un diamètre du creux à la moitié de la largeur à la moitié du maximum, soit
- un rayon du creux à la moitié de la largeur à la moitié du maximum.

10. Procédé selon l'une quelconque des revendications 8 ou 9, comprenant les étapes consistant à :
générer pour chaque creux un modèle mathématique respectif du creux sur la base de l'image SSNTD et du centre du creux,
extraire, pour chaque creux, une quantité donnée du modèle mathématique généré, la quantité donnée étant un même type de quantité pour tous les creux et étant extraite à une même valeur du modèle mathématique pour tous les creux.

11. Procédé selon l'une quelconque des revendications 8 à 10, dans lequel le centre du creux est trouvé via une transformée de Hough.

12. Procédé selon la revendication 11, dans lequel la ligne de sortie est soit une ligne, soit une moyenne radiale.

13. Appareil de traitement de données comprenant des moyens pour mettre en oeuvre les étapes du procédé selon l'une quelconque des revendications précédentes.

14. Programme informatique comprenant des instructions qui, lorsque le programme est exécuté par un ordinateur, amènent l'ordinateur à mettre en oeuvre les étapes selon l'une quelconque des revendications 1 à 12.
